**Europäisches Patentamt**

**European Patent Office**

**Office européen des brevets**

(11) Veröffentlichungsnummer: **0 179 434**
**A1**

(12) **EUROPÄISCHE PATENTANMELDUNG**

(21) Anmeldenummer: **85113352.0**

(22) Anmeldetag: **22.10.85**

(51) Int. Cl.⁴: **B 62 D 1/28**

(30) Priorität: **26.10.84 DE 3439213**

(43) Veröffentlichungstag der Anmeldung:
**30.04.86 Patentblatt 86/18**

(84) Benannte Vertragsstaaten:
**DE FR GB IT SE**

(71) Anmelder: **Willy Scheuerle Fahrzeugfabrik GmbH & Co.**
**Öhringer Strasse 16**
**D-7114 Pfedelbach(DE)**

(72) Erfinder: **Wirth, Volkarth, Dipl.-Ing.**
**Öhringer Strasse 16**
**D-7114 Pfedelbach(DE)**

(72) Erfinder: **Prechtel, Georg**
**Lohklingenstrasse 11**
**D-7114 Pfedelbach(DE)**

(74) Vertreter: **Dipl.-Phys.Dr. Manitz Dipl.-Ing. Finsterwald**
**Dipl.-Ing. Grämkow Dipl.-Chem.Dr. Heyn Dipl.-Phys.**
**Rotermund Morgan, B.Sc.(Phys)**
**Seelbergstrasse 23/25**
**D-7000 Stuttgart 50(DE)**

(54) **Lenkführungsanordnung.**

(57) Eine auf bzw. in der Fahrbahn angeordnete Leitspur (19) wird mittels einer Abtast- bzw. Sensoranordnung (18) bei der Fahrt des Fahrzeuges (1) abgetastet. Die Abtast- bzw. Sensoranordnung (18) ist in Fahrzeugquerrichtung mittels eines Stellantriebes (10) verstellbar, welcher von der Abtast- bzw. Sensoranordnung (18) derart angesteuert wird, daß der Querabstand zwischen Leitspur (19) und Abtast- bzw. Sensoranordnung (18) minimal gehalten wird. Dabei ist der Stellweg der Abtast- bzw. Sensoranordnung (18) ein Maß für den einzustellenden Lenkwinkel der Lenkräder (3). Vorzugsweise dient der Stellantrieb (10) der Abtast- bzw. Sensoranordnung (18) auch als Lenkantrieb.

FIG. 1

**EP 0 179 434 A1**

## Lenkführungsanordnung

Die Erfindung betrifft eine Lenkführungsanordnung für fahrerlosen Fahrbetrieb eines lenkbaren (nicht schienengebundenen) Fahrzeuges mit einer am Fahrzeug angeordneten Abtast- bzw. Sensoranordnung, die mit einer auf der Fahrbahn angeordneten bzw. in die Fahrbahn eingebetteten Leitspur zusammenwirkt und die Fahrzeuglenkung derart beeinflußt, daß der Abstand zwischen Abtast- bzw. Sensoranordnung und Leitspur in Fahrzeugquerrichtung minimal gehalten wird.

Fahrerlose Fahrzeuge mit derartigen Lenkführungsanordnungen dienen beispielsweise in Fabrikationsanlagen zum Transport von Werkstücken u.dgl. Insbesondere sind derartige Fahrzeuge auch in Bereichen einsetzbar, die aufgrund erhöhter Temperatur, ionisierender Strahlung u.dgl. für Menschen nicht bzw. nicht für längere Zeit oder nur mit aufwendigen Schutzanzügen u.dgl. zugänglich sind.

Bei bekannten Lenkführungsanordnungen ist die Abtast- bzw. Sensoranordnung fahrzeugfest angeordnet, wobei die Fahrzeuglenkung im Sinne eines zunehmenden Lenkeinschlages in der einen oder anderen Richtung gesteuert wird, wenn sich die Abtast- bzw. Sensoranordnung bei der Fahrt des Fahrzeuges zunehmend von der Leitspur entfernt. Diese Konstruktion kann dazu führen, daß das Fahrzeug auf einem verhältnismäßig stark ausgeprägten schlangenlinienförmigen Weg der Leitspur folgt, da die Lenkung verhältnismäßig leicht übersteuert wird.

Deshalb ist es Aufgabe der Erfindung, ein Lenkführungssystem zu schaffen, welches bei geringem Steuerungsaufwand die Möglichkeit bietet, daß das Fahrzeug der Leitspur vergleichsweise exakt folgt.

- 2 -

0179434

Diese Aufgabe wird dadurch gelöst, daß die Abtast- bzw. Sensoranordnung in Fahrzeugquerrichtung mittels eines Stellantriebes beweglich ist, der von der Abtast- bzw. Sensoranordnung im Sinne einer Annäherung derselben an die Leitspur steuerbar ist, und daß der Stellweg des Stellantriebes ein Maß für den jeweils einzustellenden Lenkeinschlag der Fahrzeuglenkung bildet.

Aufgrund der erfindungsgemäßen Anordnung folgt das Fahrzeug der Leitspur in ähnlicher Weise wie ein Anhänger einem Zugfahrzeug, an das der Anhänger in herkömmlicher Weise mittels einer Deichsel gekoppelt ist. Auch wenn die Deichsel alternierend um verhältnismäßig große Schwenkwinkel zu beiden Fahrzeugseiten hin verstellt wird, so führt der Anhänger nur vergleichsweise geringe Seitwärtsbewegungen aus. In entsprechender Weise kann die Abtast- bzw. Sensoranordnung bei der Erfindung abwechselnd zur einen und anderen Seite der Leitspur auswandern, ohne daß das Fahrzeug eine vergleichbar ausgeprägte Schlangenlinie bei seiner Fahrt ausführen würde.

Gemäß einer bevorzugten Ausführungsform kann der Stellantrieb der Abtast- bzw. Sensoranordnung auch die Lenkung des Fahrzeuges unmittelbar antreiben, beispielsweise indem Teile eines Lenkungsgestänges unmittelbar mit dem Stellantrieb gekoppelt sind.

Statt eines mechanischen Lenkungsgestänges oder sonstiger mechanischer Übertragungsglieder können auch Fluidaggregate, insbesondere Hydraulikaggregate, angeordnet sein, welche zur Steuerung der Lenkräder dienen und mit dem Stellantrieb gekoppelt sind.

Im übrigen kann der Stellantrieb auch einen Sollwertgeber, z.B. ein Potentiometer, antreiben, welcher vom Stellweg abhängige Stellsignale für Stellmotore zur Steuerung der Lenkräder erzeugt.

In besonders zweckmäßiger Ausgestaltung der Erfindung ist vorgesehen, daß die der Geradeausfahrt des Fahrzeuges zugeordnete Nullage der Abtast- bzw. Sensoranordnung in Fahrzeugquerrichtung verstellbar ist, so daß die Mittellängsachse des Fahrzeuges bei Geradeausfahrt einen mehr oder weniger großen, gleichbleibenden Seitenabstand von der Leitspur hat. Dadurch wird die Möglichkeit geschaffen, auch nach Installation der Leitspur die Fahrspur des Fahrzeuges innerhalb gewisser Grenzen gegenüber der Leitspur zu verändern.

Wenn ein fernsteuerbarer bzw. nach vorgebbarem Programm steuerbarer Stellmotor zur fahrstreckenabhängigen Einstellung sowie Veränderung der Nullage angeordnet ist, ist die vorteilhafte Möglichkeit gegeben, die vom Fahrzeug tatsächlich durchlaufene Fahrspur auf verschiedenen Abschnitten einer Fahrstrecke unterschiedlich gegenüber der Leitspur zu verlegen. Dies ist insbesondere dann von Bedeutung, wenn die Leitspur in relativ geringem seitlichen Abstand von Hindernissen verlegt worden ist und zunächst eingesetzte kleinere Fahrzeuge, die der Leitspur ohne Beeinträchtigung durch die Hindernisse folgen konnten, durch größere, insbesondere breitere Fahrzeuge ersetzt werden sollen. In diesem Falle kann das Fahrzeug durch entsprechende Veränderung der Nullage an den Hindernissen vorbeigeführt werden, obwohl die Leitspur in relativ großer Nähe zu den Hindernissen verlegt wurde.

Nachfolgend wird die Erfindung anhand eines bevorzugten Ausführungsbeispieles erläutert, welches in der Zeichnung dargestellt ist. Dabei zeigt

Fig. 1   eine schematisierte Draufsicht auf ein Fahrzeug, welches einer geraden Leitspur in Geradeausfahrt folgt, wobei die Leitspur aufgrund entsprechender Einstellung der Nullage der Abtast- bzw. Sensoranordnung in Fahrzeugmitte verläuft,

Fig. 2   eine der Fig. 1 entsprechende Draufsicht, jedoch mit nach links verstellter Abtast- bzw. Sensoranordnung und

Fig. 3   eine der Fig. 1 entsprechende Draufsicht, jedoch mit nach rechts verstellter Abtast- bzw. Sensoranordnung.

In den Figuren ist jeweils schematisch ein Fahrzeugvorderteil 1 mit jeweils sechs lenkbaren Achsen 2 dargestellt. Diese Achsen tragen jeweils zwei Lenkräder 3.

An den um Fahrzeughochachsen 4 schwenkbaren Achsträgern 5 sind jeweils Lenkhebel 6 angeordnet, die ihrerseits miteinander über Spurstangen 7 verbunden sind, so daß die Lenkachsen 2 jeder Fahrzeugseite gleichsinnige Lenkbewegungen ausführen. Die Achsträger 5 der beiden vordersten Lenkachsen 2 sind darüber hinaus mittels weiterer Lenkhebel 6' und weiterer Spurstangen 7' mit einer Lenktraverse 8 verbunden, die ihrerseits um eine Fahrzeughochachse 9 schwenkbar angeordnet ist und mittels hydraulischer Lenkzylinderaggregate 10 antreibbar ist.

Wenn also die Lenktraverse 8 eine Schwenkung im Uhrzeigersinne ausführt, so werden auch die Lenkachsen 2 in gleicher
Schwenkrichtung verstellt. Entsprechendes gilt bei einer
Schwenkung der Lenktraverse 8 entgegen dem Uhrzeigersinne.

Die Lenktraverse 8 ist des weiteren über eine Spindel 11
mit einem winkelförmigen Hebel 12 gekoppelt, der seinerseits um eine Hochachse 13 am Fahrzeug 1 schwenkgelagert
ist.

Die nahe des einen Endes an der Lenktraverse 8 angelenkte
Spindel 11 wirkt mit einem Stellmotor 14 zusammen, welcher
am Hebelarm 12' des Winkelhebels 12 um eine Hochachse
schwenkbar angeordnet ist und ein auf der Spindel 11 durch
Verdrehung verschiebbares Mutternteil od.dgl. antreibt.
Damit kann der Abstand des freien Endes des Hebelarmes 12'
von dem mit der Spindel 11 verbundenen Ende der Lenktraverse 8 eingestellt werden.

Neben dem anderen Hebelarm 12" des Winkelhebels 12 ist am
Fahrzeug ein Stangenteil 15 um eine Hochachse 16 schwenkbar gelagert. An den freien Enden des Stangenteiles 15
sowie des Hebelarmes 12" ist ein Tragteil 17 für eine
Abtast- bzw. Sensoranordnung 18 angelenkt. Dieses Tragteil
17 wird bei Verschwenkung des Winkelhebels 12 vom Hebelarm
12" sowie dem Stangenteil 15 parallelogrammartig geführt.

Die Abtast- bzw. Sensoranordnung 18 wirkt mit einer Leitspur 19, beispielsweise einem in der Fahrbahn eingebetteten
Leitdraht, berührungslos zusammen, derart, daß die Lenkzylinderaggregate 10 von der Abtast- bzw. Sensoranordnung
18 mittels einer nicht dargestellten Steuerung so verstellt
werden, daß die Abtast- bzw. Sensoranordnung 18 quer zur
Leitspur 19 allenfalls geringfügig auswandern kann. Die Lenkzylinderaggregate 10 dienen also sowohl als Stellantrieb für die Abtast- bzw. Sensoranordnung 18, um dieselbe immer über der Leitspur 19 zu halten, sowie als Antrieb der Fahrzeuglenkung. Dabei sind die Lenkwinkel der Lenkachsen 2 umkehrbar eindeutig vom Stellweg der Abtast- bzw. Sensoranordnung 18 abhängig.

Der Vorteil der dargestellten Anordnung liegt vor allem darin, daß die Abtast- bzw. Sensoranordnung 18 bei der Fahrt des Fahrzeuges 1 der Leitspur 19 gegebenenfalls auch auf einem schlangenlinienförmigen Weg folgen kann, ohne daß das Fahrzeug 1 vergleichbar ausgeprägte Pendelbewegungen in Seitwärtsrichtung ausführt.

Falls das Fahrzeug außerhalb von Wegen mit Leitspuren 19 von einem Fahrer gelenkt werden soll, so genügt es zum Übergang auf fahrerlosen Betrieb in der Nähe einer Leitspur 19, wenn der Fahrer die Lenkung so weit einschlägt, daß die Abtast- bzw. Sensoranordnung 18 mit der Leitspur 19 zusammenwirken kann, d.h. die Leitspur 19 "sieht". Dagegen ist es nicht notwendig, daß das Fahrzeug 1 eine vorgegebene Relativlage zur Leitspur 19 einnimmt bzw. in eine solche Relativlage rangiert werden muß.

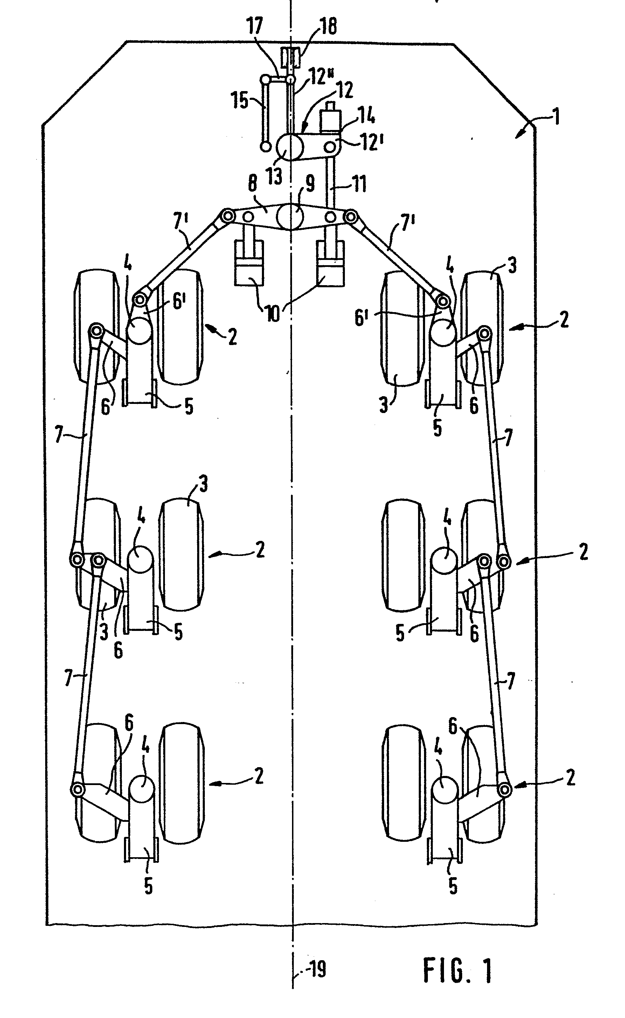

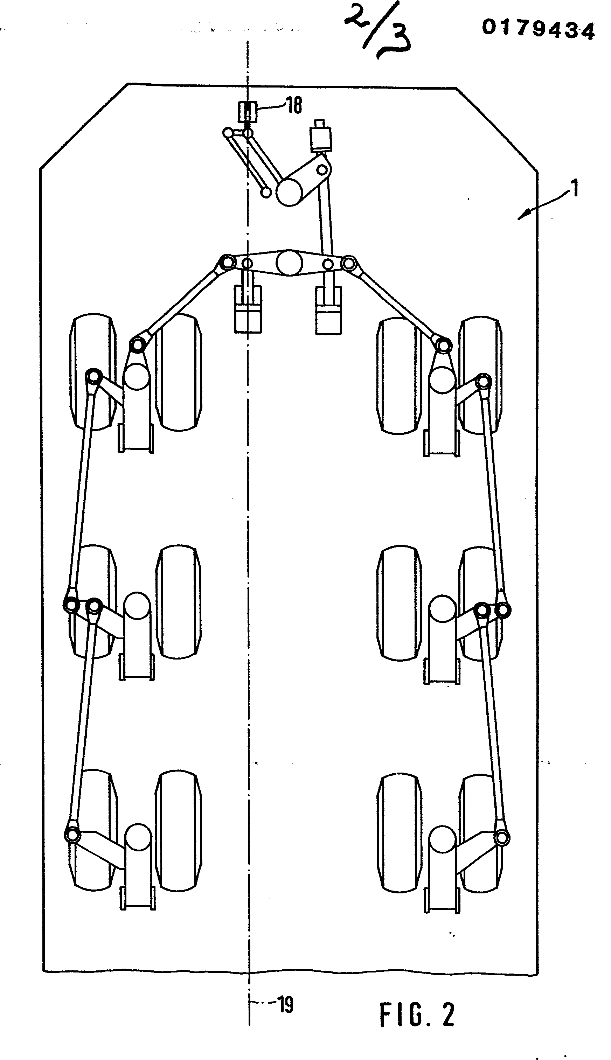

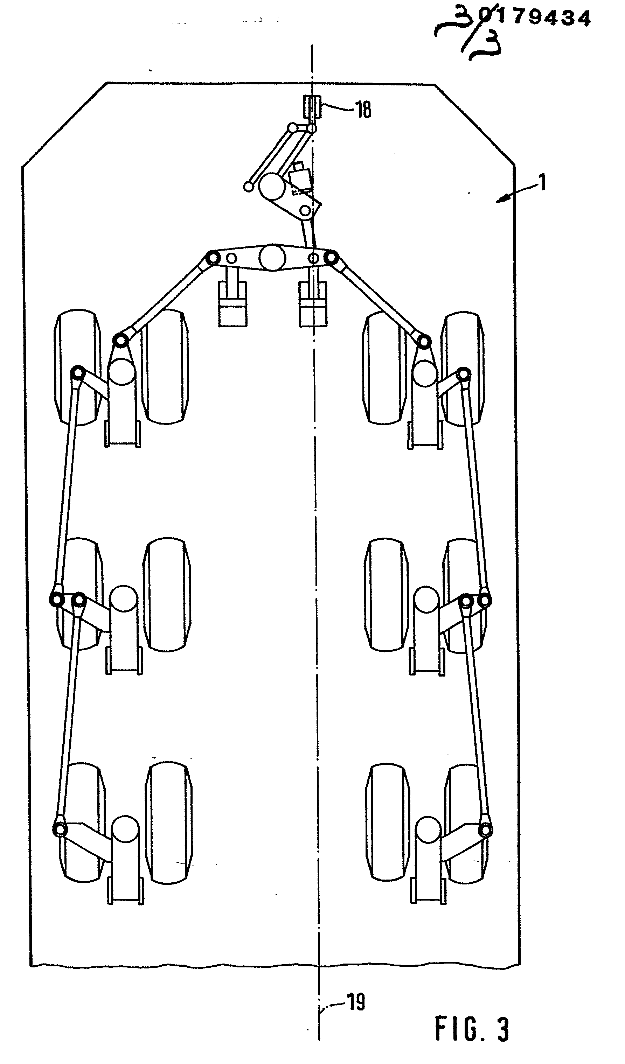

In den Figuren 1 bis 3 ist der Abstand zwischen dem Hebelarm 12" des Winkelhebels 12 und dem mit der Spindel 11 verbundenen Ende der Lenktraverse 8 durch entsprechende Ansteuerung des Stellmotors 14 unterschiedlich eingestellt. Im Beispiel der Fig. 1 nimmt die Abtast- bzw. Sensoranordnung 18 bei Geradeausstellung der Lenkachsen 2 eine Lage in der Fahrzeugmitte ein, während die Abtast- bzw. Sensoranordnung 18 in den Beispielen der Figuren 2 und 3 in Geradeausstellung der Lenkachsen 2 (bei Ansicht in Fahrtrichtung) nach links bzw. rechts relativ zur Fahrzeugmitte verschoben ist. Dadurch wird erreicht, daß die Fahrzeugmitte gegenüber der Leitspur 19 nach links bzw. rechts versetzt wird, wenn die Abtast- bzw. Sensoranordnung 18 bei der Fahrt des Fahrzeuges 1 der Leitspur 19 folgt.

Gegebenenfalls ist es möglich, den Stellmotor 14 während der Fahrt des Fahrzeuges anzusteuern, so daß die Fahrspur des Fahrzeuges 1 während der Fahrt gegenüber der Leitspur 19 zur einen oder anderen Seite hin verlegt wird. Dementsprechend kann die Fahrspur an aufeinanderfolgenden Abschnitten der Leitspur 19 unterschiedlich versetzt liegen. Damit wird die vorteilhafte Möglichkeit geschaffen, daß das Fahrzeug 1 an Hindernissen vorbeilaufen kann, die einen relativ geringen Abstand von der Leitspur 19 haben. Damit kann eine Verlegung der Leitspur 19 erübrigt werden.

Bei dem dargestellten Ausführungsbeispiel sind die als Stellantrieb der Abtast- und Sensoranordnung 18 dienenden Lenkzylinderaggregate 10 mechanisch mit der Fahrzeuglenkung gekoppelt. Stattdessen ist jedoch auch eine hydraulische oder elektrische Kopplung möglich.

Beispielsweise kann der Stellantrieb der Abtast- und Sensoranordnung 18 mit einem Potentiometer (nicht dargestellt) gekoppelt sein, welches Stellsignale für elektrische Stellmotore erzeugt, die ihrerseits von den Stellsignalen und damit vom Stellweg der Abtast- und Sensoranordnung 18 abhängige Lenkwinkel der Lenkachsen 2 einstellen.

Im dargestellten Beispiel ist die Abtast- bzw. Sensoranordnung 18 am in Fahrtrichtung vorderen Ende des Fahrzeuges 1 angeordnet. Dies ist jedoch nicht unbedingt notwendig. Stattdessen kann die Abtast- und Sensoranordnung 18 auch weiter hinten am Fahrzeug angeordnet sein.

Darüber hinaus ist es möglich, Abtast- bzw. Sensoranordnungen 18 am vorderen und hinteren Fahrzeugende anzuordnen, wobei dann die eine Abtast- bzw. Sensoranordnung 18 zur Steuerung der Lenkung bei Vorwärtsfahrt dient, während die andere Abtast- bzw. Sensoranordnung die Steuerung bei Rückwärtsfahrt übernimmt.

Gegebenenfalls können die Abtast- und Sensoranordnungen 18 auch zur Höheneinstellung des Fahrzeuges 1 dienen, wenn dasselbe mit einer Niveauregulierung ausgerüstet ist. In diesem Falle erzeugen die Abtast- bzw. Sensoranordnungen 18 zusätzlich Signale in Abhängigkeit von ihren Bodenabständen, um Abstützaggregate der Achsen 2 in Vertikalrichtung zu steuern. Gegebenenfalls können die Abtast- und Sensoranordnungen auch - beispielsweise mittels eines Rades - auf dem Untergrund aufliegen, wobei dann vertikale Relativbewegungen der Abtast- bzw. Sensoranordnungen 18 gegenüber dem Fahrzeug 1 in die entsprechenden Stellsignale für die Abstützaggregate umgesetzt werden.

Ansprüche

1. Lenkführungsanordnung für fahrerlosen Fahrbetrieb eines lenkbaren (nicht schienengebundenen) Fahrzeuges mit einer am Fahrzeug angeordneten Abtast- bzw. Sensoranordnung, die mit einer auf der Fahrbahn angeordneten bzw. in die Fahrbahn eingebetteten Leitspur - vorzugsweise berührungslos - zusammenwirkt und die Fahrzeuglenkung derart beeinflußt, daß der Abstand zwischen Abtast- bzw. Sensoranordnung und Leitspur in Fahrzeugquerrichtung minimal gehalten wird, dadurch g e k e n n - z e i c h n e t , daß die Abtast- bzw. Sensoranordnung (18) in Fahrzeugquerrichtung mittels eines Stellantriebes (10) beweglich ist, der von der Abtast- bzw. Sensoranordnung (18) im Sinne einer Annäherung derselben an die Leitspur (19) steuerbar ist, und daß der Stellweg des Stellantriebes (10) ein Maß für den jeweils einzustellenden bzw. eingestellten Lenkeinschlag der Fahrzeuglenkung bildet.

2. Lenkführungsanordnung nach Anspruch 1, dadurch gekennzeichnet, daß der Stellantrieb (10) die Lenkung des
Fahrzeuges unmittelbar antreibt.

3. Lenkführungsanordnung nach einem der Ansprüche 1 oder 2,
dadurch gekennzeichnet, daß der Stellantrieb (10) mit
Teilen (7') eines Lenkungsgestänges (7) gekoppelt ist.

4. Lenkführungsanordnung nach einem der Ansprüche 1 oder 2,
dadurch gekennzeichnet, daß der Stellantrieb (10) mit
Fluidaggregaten der Lenkung gekoppelt ist.

5. Lenkführungsanordnung nach einem der Ansprüche 1 oder 2,
dadurch gekennzeichnet, daß der Stellantrieb (10) einen
Sollwertgeber, z.B. ein Potentiometer, antreibt, welcher
vom Stellweg abhängige Stellsignale für Stellmotore der
Lenkung erzeugt.

6. Lenkführungsanordnung nach einem der Ansprüche 1 bis 5,
dadurch gekennzeichnet, daß die der Geradeausfahrt des
Fahrzeuges (1) zugeordnete Nullage der Abtast- bzw. Sensoranordnung (18) in Fahrzeugquerrichtung verstellbar ist.

7. Lenkführungsanordnung nach Anspruch 6, dadurch gekennzeichnet, daß ein fernsteuerbarer bzw. nach vorgebbarem
Programm steuerbarer Stellmotor (14) zur fahrstreckenabhängigen Einstellung sowie Veränderung der Nullage
angeordnet ist.

FIG. 1

2/3

0179434

18

1

19

FIG. 2

FIG. 3

Europäisches
Patentamt

**EUROPÄISCHER RECHERCHENBERICHT**

**0179434**
Nummer der Anmeldung

EP 85 11 3352

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 598 196 (BALLANTYNE et al.) <br> * Spalte 2, Zeilen 11-27; Spalte 3, Zeilen 40-67; Figuren 1,3,4 * | 1,2 | B 62 D 1/28 |
| Y | | 3-7 | |
| | --- | | |
| Y | FR-A-1 409 198 (ROZE) <br> * Spalte 1, Zeile 41 - Spalte 2, Zeile 11; Spalte 4, Zeilen 9-11 * | 3,4 | |
| | --- | | |
| Y | DE-A-2 914 077 (YAVER FENDT) <br> * Seite 8, Zeile 23 - Seite 9, Zeile 11; Figur 2 * | 5 | |
| A | | 1,2 | RECHERCHIERTE SACHGEBIETE (Int. Cl.4) |
| | --- | | |
| Y | GB-A- 938 874 (ASSOCIATED ELECTRICAL INDUSTRIES) <br> * Seite 1, Zeilen 63-79; Figur 1 * | 6,7 | B 62 D 1/00 |
| | --- | | |
| A | US-A-3 912 037 (KRIEG) <br> * Spalte 4, Zeilen 3-53; Figuren 1,2 * | 1 | |
| | --- | | |
| A | DE-A-2 935 065 (JUNGHEINRICH) <br> * Seite 9, Zeilen 21-30; Figur 2 * | 1 | |
| | --- -/- | | |

Der vorliegende Recherchenbericht wurde für alle Patentansprüche erstellt.

| Recherchenort <br> BERLIN | Abschlußdatum der Recherche <br> 18-12-1985 | Prüfer <br> STANDRING M A |
|---|---|---|

Europäisches Patentamt

**EUROPÄISCHER RECHERCHENBERICHT**

**0179434**
Nummer der Anmeldung

EP 85 11 3352

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 519 619 (MESSERSCHMITT-BÖLKOW-BLOHM) * Seite 4, Zeilen 1-18; Figuren 1-5 * | 1 | |

-----

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| BERLIN | 18-12-1985 | STANDRING M A |

EPA Form 1503 03 82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument